# EUROPEAN PATENT APPLICATION

(11) **EP 2 128 687 A1**
(43) Date of publication of application: **02.12.2009**
(21) Application number: 08711385.8
(22) Date of filing: 15.02.2008
(51) Int. Cl.: G02F 1/133

(54) **LIGHT SOURCE DEVICE AND LIQUID CRYSTAL DISPLAY DEVICE**

(30) Priority: 23.02.2007 JP 2007044299
(71) Applicant: Sony Corporation, Tokyo 108-0075 (JP)
(72) Inventor: OKABE, Mitsuru, Tokyo 108-0075 (JP)
(74) Representative: Thévenet, Jean-Bruno
(86) International application number: PCT/JP2008/052555
(87) International publication number: WO 2008/102706

(57) **Abstract**

A light source device capable of adjusting luminance distribution of a display picture in consideration of lightness of surrounding environment (environment light) not depending on a content of the display picture is provided. An outside light sensor 16 receives outside light (environment light Ls) around the device. According to a light quantity of the received environment light Ls, a backlight control section 12 respectively controls a light emission quantity of each partial lighting section 4 in a light source section 10. It is possible that the light emission quantity of each partial lighting section 4 is respectively controlled by using luminance information of a picture contained in an RGB signal supplied from an RGB processing section 60 in addition to the light quantity of the environment light Ls.

## Description

### TECHNICAL FIELD

The present invention relates to a light source device having a plurality of partial lighting sections controllable independently of each other, and a liquid crystal display unit using such a light source device.

### BACKGROUND ART

Currently, as typified by a liquid crystal TV and a Plasma Display Panel (PDP), there is a trend toward a thin display. Specially, many mobile-use displays are liquid crystal system displays, being desired to realize accurate color reproducibility. Further, as a backlight of a liquid crystal panel, a Cold Cathode Fluorescent Lamp (CCFL) type using a fluorescence tube is the main stream. However, less mercury is demanded environmentally, and thus as a light source alternative to the CCFL, a Light Emitting Diode (LED) and the like are prospective.

As a backlight device using such an LED, for example, the backlight devices described in, for example, Patent documents 1 and 2 have been proposed.

[Patent Document 1] Japanese Unexamined Patent Application Publication No. 2006-145886
[Patent Document 2] Japanese Unexamined Patent Application Publication No. 2006-243283

### DISCLOSURE OF INVENTION

In Patent document 1, a backlight device in which the luminance level of the entire backlight device is changed according to lightness of surrounding environment by detecting outside light is proposed.

However, in the case where the luminance level of the entire backlight device is changed without variation, in some cases, appropriate processing is not always performed depending on luminance distribution of a display picture. In the case where appropriate processing is not performed, an appearance of the display picture differs according to environment light, and the image quality is deteriorated in some cases.

As described above, in the conventional technology, it has been difficult to inhibit image quality deterioration caused by environment light not depending on a content of the display picture, and there is a room for improvement.

As a related technology, Patent document 2 discloses a technology in which to improve video response of a liquid crystal panel, a light source section is divided into a plurality of partial lighting sections, lighting operation is sequentially performed by the plurality of partial lighting sections not depending on luminance distribution of a display picture and environment light, and thereby so-called black insertion processing is performed.

In view of the foregoing disadvantages, it is a first object of the present invention to provide a light source device capable of adjusting luminance distribution of a display picture in consideration of environment light not depending on a content of the display picture.

It is a second object of the present invention to provide a liquid crystal display unit capable of inhibiting image quality deterioration caused by environment light not depending on a content of a display picture.

A light source device of the present invention is applied to a liquid crystal display unit including a liquid crystal panel modulating incident light based on a picture signal, and includes a light source section, a drive means, a light receiving device receiving environment light around the device, and a drive means. The foregoing light source section has a plurality of partial lighting sections, each of the partial lighting sections being controlled separately, and emits light which is to be an incident light to the liquid crystal panel. Further, the drive means drives the light source section so that each of the partial lighting sections lights separately. In addition, the foregoing control means controls the drive means according to a light quantity of the environment light received by the light receiving device and to luminance distribution of a display picture contained in the picture signal, and controls a light emission quantity of each of the partial lighting sections.

A liquid crystal display unit of the present invention includes an illuminating means for emitting light and a liquid crystal panel modulating the light emitted from the illuminating means based on a picture signal. The foregoing illuminating means has the foregoing light source section, the foregoing drive means, the foregoing light receiving device, and the foregoing control means.

In the light source device and the liquid crystal display unit of the present invention, the light receiving device receives the environment light around the device. Then, the light emission quantity of each partial lighting section is respectively controlled according to the light quantity of the received environment light and the luminance distribution of the display picture.

In the light source device of the present invention, the foregoing control means is able to exercise control so that a light emission quantity of a partial lighting section which emits light at given luminance or more is decreased in the case where the light quantity of the environment light is smaller than a given threshold value. In this case, in the case where the light quantity of the environment light is smaller than the threshold value, that is, the surroundings of the device are comparatively dark, the light emission luminance of the partial lighting section which emits light at given luminance or more is lowered. Thus, the border between the partial lighting section which emits light at given luminance or more and the partial lighting section on the periphery thereof is hardly viewed.

Further, in the case where the light quantity of the environment light is larger than the threshold value, the foregoing control means may exercise control so that the light emission quantity of the partial lighting section which emits light at given luminance or more is increased. In this case, in the case where the light quantity of the environment light is larger than the threshold value, that is, the surroundings of the device are comparatively light, the light emission luminance of the partial lighting section which emits light at given luminance or more is increased. Thus, lowering of contrast under such an environment is more inhibited than in the conventional art.

In the light source device of the present invention, it is possible that the control means exercises control, based on the luminance distribution of the display picture, so that light emission quantity of a partial lighting section in a region corresponding to a higher luminance region in a picture display region is larger than light emission quantities of other partial lighting sections, while the control means controls the light emission quantity of each partial lighting section according to the light quantity of environment light. In this case, while the light emission quantity of each partial lighting section is controlled so that the display luminance of the high luminance region is more increased, the light emission quantity of each partial lighting section is controlled according to the light quantity of the environment light. That is, it is possible that while so-called contrast enhancement processing is performed, the light emission quantity control of the partial lighting section according to lightness of the surrounding environment is enabled.

According to the light source device of the present invention, the light receiving device receives the environment light around the device, and the light emission quantity of each partial lighting section is respectively controlled according to the light quantity of the received environment light and the luminance distribution of the display picture. Thus, the luminance distribution of the display picture is able to be adjusted in consideration of lightness (environment light) of the surrounding environment not depending on a content of the display picture.

Further, according to the liquid crystal display unit of the present invention, the light receiving device receives the environment light around the device, and the light emission quantity of each partial lighting section is respectively controlled according to the light quantity of the received environment light and the luminance distribution of the display picture. Thus, in the illuminating means, the luminance distribution of the display picture is able to be adjusted in consideration of lightness (environment light) of the surrounding environment not depending on a content of the display picture. Thus, image quality deterioration caused by lightness (environment light) of the surrounding environment is able to be inhibited not depending on a content of the display picture.

### BRIEF DESCRIPTION OF DRAWINGS

[Fig. 1] Fig. 1 is a perspective view illustrating an overall structure of a liquid crystal display unit according to a first embodiment of the present invention;
[Fig. 2] Fig. 2 is a plan schematic view illustrating a structural example of a unit (partial lighting section) of a light source section in the backlight device illustrated in Fig. 1;
[Fig. 3] Fig. 3 is a plan schematic view illustrating an arrangement structural example of the partial lighting section in the light source section;
[Fig. 4] Fig. 4 is a block diagram illustrating an overall structure of the liquid crystal display unit illustrated in Fig. 1;
[Fig. 5] Fig. 5 is a block diagram illustrating in detail structures of drive and control sections of the light source section illustrated in Fig. 4;
[Fig. 6] Fig. 6 is a timing waveform chart for explaining a drive pulse signal of the light source section;
[Fig. 7] Fig. 7 is a timing waveform chart for explaining an example of drive methods of the liquid crystal display panel and the backlight device illustrated in Fig. 1;
[Fig. 8] Fig. 8 is a perspective view for explaining an example of arrangement relations between a picture display region and a partial lighting region;
[Fig. 9] Fig. 9 is a perspective view for explaining another example of arrangement relations between the picture display region and the partial lighting region;
[Fig. 10] Fig. 10 is a plan schematic view for explaining a relation between a light quantity of outside light (environment light) and a display image quality in a comparative example;
[Fig. 11] Fig. 11 is a flowchart illustrating an example of control operation by using outside light according to the first embodiment;
[Fig. 12] Fig. 12 is a timing waveform chart illustrating an example of the control operation by using outside light in the case where light emission luminance is decreased in Fig. 11;
[Fig. 13] Fig. 13 is a timing waveform chart illustrating another example of the control operation by using outside light in the case where light emission luminance is decreased in Fig. 11;
[Fig. 14] Fig. 14 is a plan schematic view for explaining change of a display image quality in the case where light emission luminance is decreased in Fig. 11;
[Fig. 15] Fig. 15 is a timing waveform chart illustrating an example of the control operation by using outside light in the case where light emission luminance is increased in Fig. 11;
[Fig. 16] Fig. 16 is a timing waveform chart illustrating another example of the control operation by using outside light in the case where light emission luminance is increased in Fig. 11;
[Fig. 17] Fig. 17 is a plan schematic view for explaining change of a display image quality in the case where light emission luminance is increased in Fig. 11;
[Fig. 18] Fig. 18 is a perspective view for explaining luminance enhancement operation of a display picture according to a second embodiment;
[Fig. 19] Fig. 19 is a flowchart illustrating an example of control operation by using outside light according to the second embodiment;
[Fig. 20] Fig. 20 is a timing waveform chart illustrating an example of the control operation by using outside light illustrated in Fig. 19; and
[Fig. 21] Fig. 21 is a timing waveform chart illustrating another example of the control operation by using outside light illustrated in Fig. 19.

### BEST MODES FOR CARRYING OUT THE INVENTION

Embodiments of the present invention will be hereinafter described in detail with reference to the drawings.

### [First embodiment]

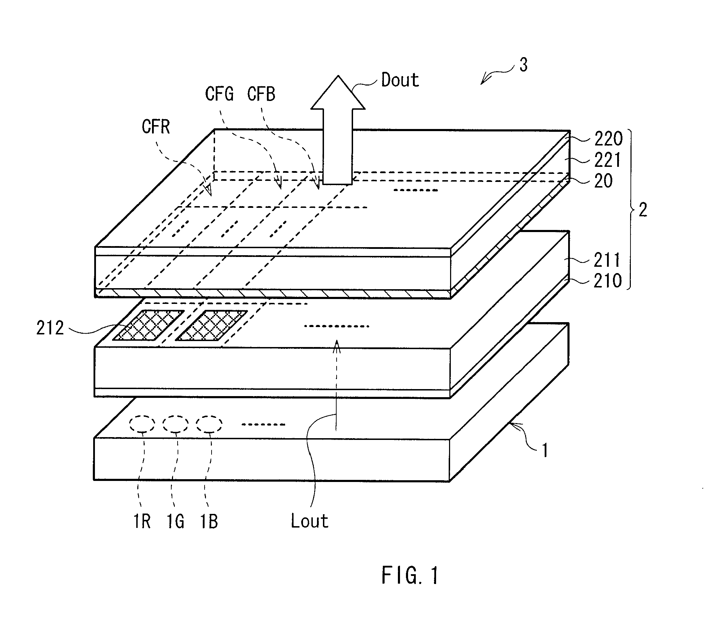

Fig. 1 illustrates an overall structure of a liquid crystal display unit (liquid crystal display unit 3) according to a first embodiment of the present invention. The liquid crystal display unit 3 is a so-called transmissive liquid crystal display unit that emits transmitted light as display light Dout. The liquid crystal display unit 3 includes a backlight device 1 as a light source device according to the first embodiment of the present invention and a transmissive liquid crystal display panel 2.

The liquid crystal display panel 2 is configured of a transmissive liquid crystal layer 20, a pair of substrates sandwiching the liquid crystal layer 20, that is, a TFT (Thin Film Transistor) substrate 211 as a substrate on the backlight device 1 side and an opposed electrode substrate 221 as a substrate that is opposed to the TFT substrate 211, and polarization plates 210 and 220 respectively layered on the side opposite to the liquid crystal layer 20 with respect to the TFT substrate 211 and the opposed electrode substrate 221.

Further, matrix-like pixels are structured in the TFT substrate 211, and a pixel electrode 212 including a drive element such as a TFT is formed in each pixel.

The backlight device 1 is an additive color mixture type device in which a plurality of color light (in this case, red light, green light, and blue light) are mixed to obtain illuminated light Lout as specific color light (in this case, white light). The backlight device 1 has a light source section (light source section 10 described later) including a plurality of red LEDs 1R, green LEDs 1G, and blue LEDs 1B.

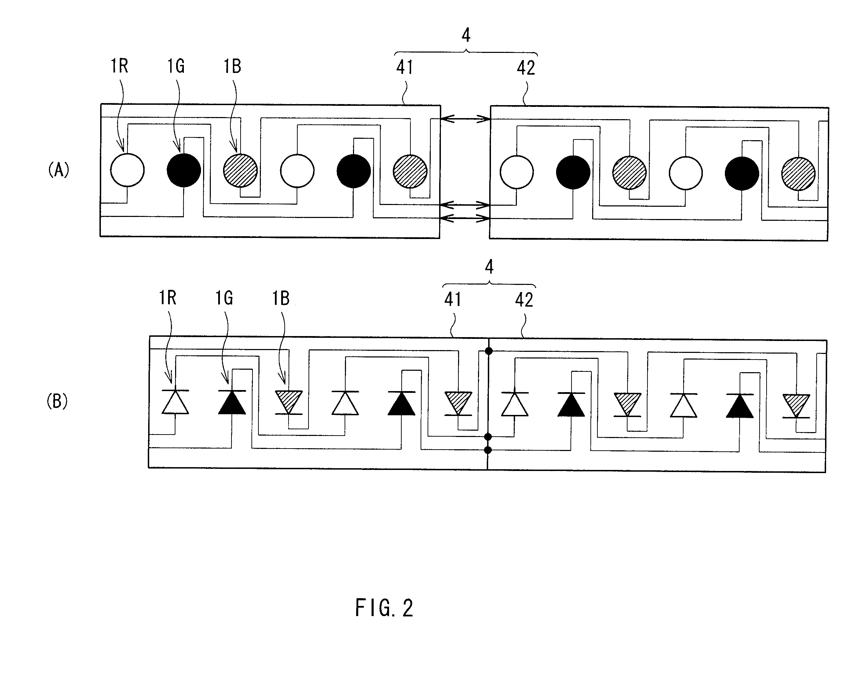

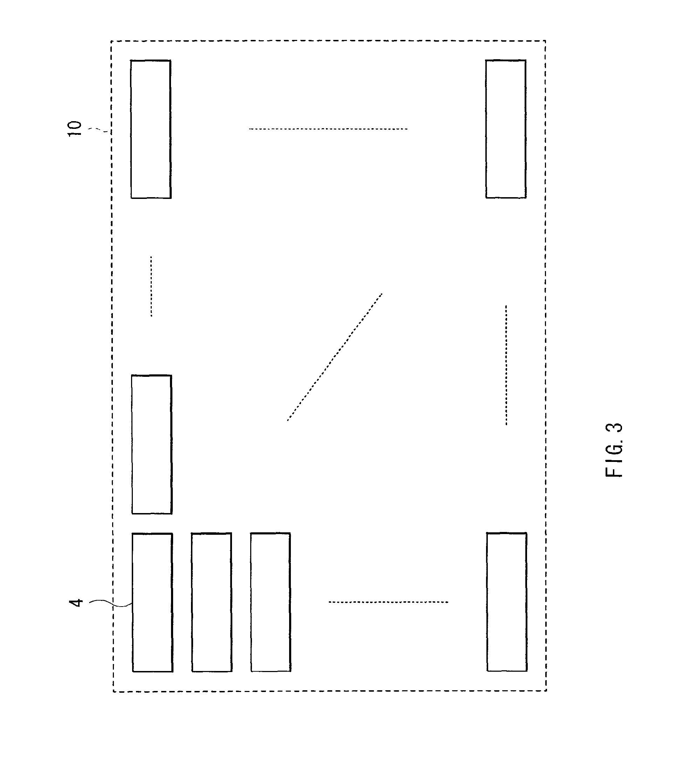

Fig. 2 and Fig. 3 illustrate an example of an arrangement structure of each color LED in the backlight device 1.

As illustrated in Fig. 2(A), unit cells 41 and 42 of a light emitting section are respectively formed from two sets of the red LEDs 1R, two sets of the green LEDs 1G, and two sets of the blue LEDs 1B. A partial lighting section 4 as a unit of the light emitting section is formed from the two unit cells 41 and 42. Further, in each unit cell and between the unit cell 41 and the unit cell 42, each color LED is respectively connected in series. Specifically, as illustrated in Fig. 2(B), an anode and a cathode of each LED are connected.

Further, the respective partial lighting sections 4 structured as above are arranged in a state of matrix in the light source section 10, for example, as illustrated in Fig. 3. As described later, the partial lighting sections 4 are able to be controlled independently of each other.

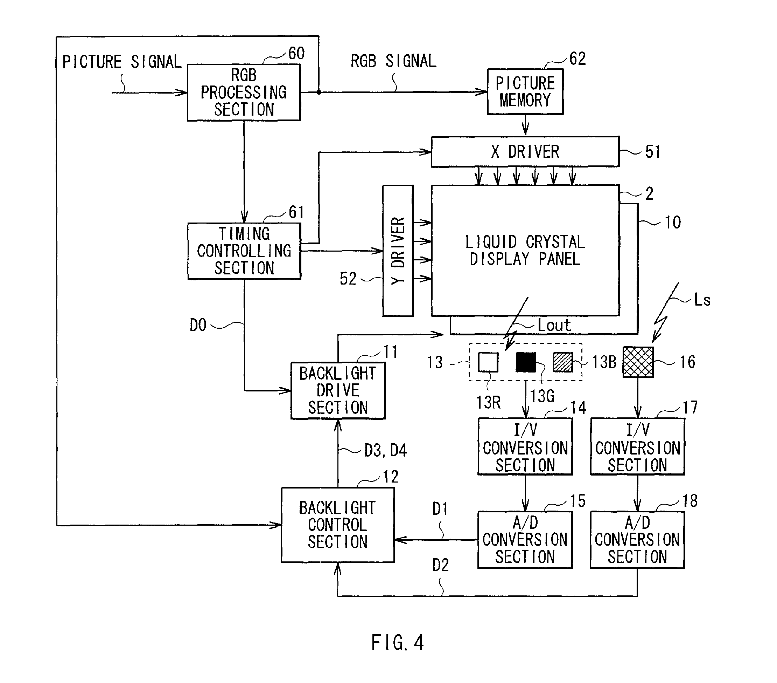

Next, a description will be given in detail of structures of a drive section and a control section of the liquid crystal display panel 2 and the light source section 10 described above with reference to Fig. 4. Fig. 4 illustrates a block configuration of the liquid crystal display unit 3.

As illustrated in Fig. 4, a drive circuit for driving the liquid crystal display panel 2 to display a picture is configured of an X driver (data driver) 51 that supplies a drive voltage based on a picture signal to the respective pixel electrodes 212 in the liquid crystal display panel 2, a Y driver (gate driver) 52 that line-sequentially drives the respective pixel electrodes 212 in the liquid crystal display panel 2 along a scanning line not illustrated, a timing controlling section (timing generator) 61 that controls the X driver 51 and the Y driver 52, an RGB processing section 60 (signal generator) that processes an external picture signal and generates an RGB signal, and a picture memory 62 as a frame memory that stores the RGB signal from the RGB processing section 60.

Meanwhile, a section that drives and controls lighting operation of the light source section 10 of the backlight device 1 is configured of a backlight drive section 11, a backlight control section 12, an illuminated light sensor 13, an outside light sensor 16, I/V conversion sections 14 and 17, and an A/D conversion sections 15 and 18.

The illuminated light sensor 13 receives the illuminated light Lout from the light source section 10 to obtain a light receiving signal. The illuminated light sensor 13 is configured of a red light sensor 13R that extracts and selectively receives red light out of mixed light (in this case, white light) composed of a mixture of a plurality of color light (in this case, red light, green light, and blue light), a green light sensor 13G that extracts and selectively receives green light out of the mixed light, and a blue light sensor 13B that extracts and selectively receives blue light out of the mixed light. The illuminated light sensor 13 is arranged, for example, in the vicinity of the light source section 10 (under or rear of the light source section 10).

The outside light sensor 16 receives outside light (environment light Ls) around the backlight device 1 to obtain a light receiving signal. The outside light sensor 16 is arranged in a location where the outside light sensor 16 is not affected by the illuminated light Lout from the light source section 10, for example, on a housing (not illustrated) of the liquid crystal display unit 3 or a side face thereof.

The I/V conversion section 14 performs I/V (current/voltage) conversion for the light receiving signal for each color obtained by the illuminated light sensor 13, and outputs light receiving data as an analog voltage signal for each color. Further, the I/V conversion section 17 performs I/V conversion for the light receiving signal obtained by the outside light sensor 16, and outputs light receiving data as an analog voltage signal.

The A/D conversion section 15 respectively performs A/D (analogue/digital) conversion for the light receiving data for each color outputted from the I/V conversion section 14, and outputs light receiving data D1 as a digital voltage signal for each color to the backlight control section 12. Further, the A/D conversion section 18 performs A/D conversion for the light receiving data outputted from the I/V conversion section 17, and outputs light receiving data D2 as a digital voltage signal to the backlight control section 12.

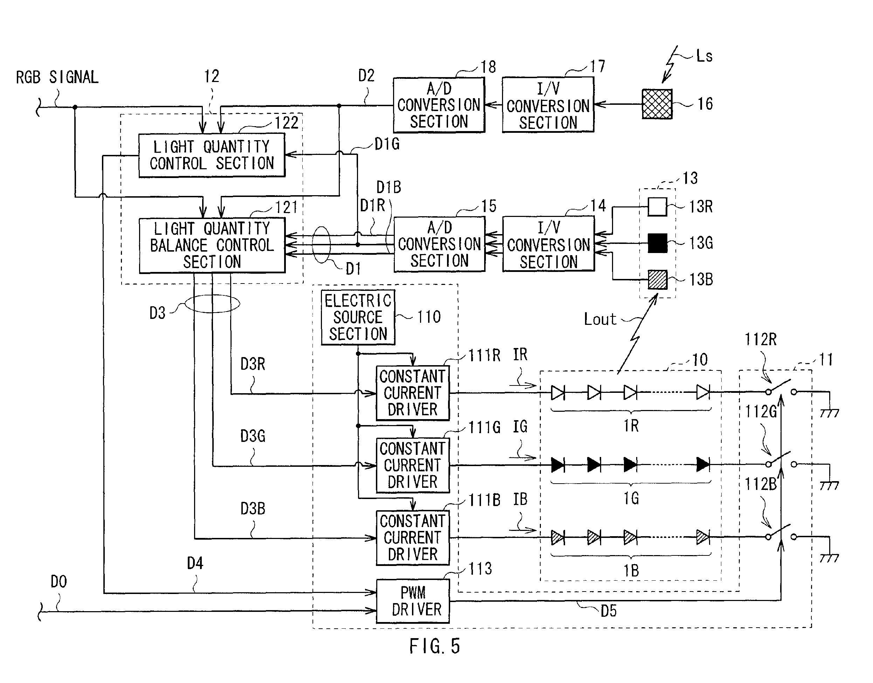

The backlight control section 12 generates and outputs after-mentioned control signals D3 and D4 based on the light receiving data D1 for each color supplied from the A/D conversion section 15, the light receiving data D2 supplied from the A/D conversion section 18, and the RGB signal supplied from the RGB processing section 60, and controls drive operation of the backlight drive section 11. For the detailed structure of the backlight control section 12, a description will be given later (Fig. 5).

The backlight drive section 11 drives the light source section 10 to perform lighting operation in units of the partial lighting section 4 based on the control signals D3 and D4 supplied from the backlight control section 12 and a control signal D0 supplied from the timing control section 61. In addition, for the detailed structure of the backlight drive section 11, a description will be given later (Fig. 5) as well.

Next, a description will be given of detailed structures of the foregoing backlight drive section 11 and the backlight control section 12 with reference to Fig. 5. Fig. 5 is a block diagram illustrating the detailed structures of the backlight drive section 11 and the backlight control section 12 and structures of the light source section 10, the illuminated light sensor 13, the outside light sensor 16, the I/V conversion sections 14 and 17, and the A/D conversion sections 15 and 18. Further, the light receiving data D1 is configured of red light receiving data D1R, green light receiving data D1G, and blue light receiving data D1B. The control signal D3 is configured of a red-use control signal D3R, a green-use control signal D3G, and a blue-use control signal D3B. In addition, as a matter of convenience, in the figure, the red LED 1R, the green LED 1G, and the blue LED 1B are all connected in series in the light source section 10.

The backlight drive section 11 has an electric source section 110; constant current drivers 111R, 111G, and 111B that respectively supply currents IR, IG, and IB to the anode side of the red LED 1R, the green LED 1G, and the blue LED 1B in the light source section 10 by electric source supply from the electric source section 110 according to the control signal D3 (the red-use control signal D3R, the green-use control signal D3G, and the blue-use control signal D3B) supplied from the backlight control section 12; switching devices 112R, 112G, and 112B that are respectively connected between each cathode of the red LED 1R, the green LED 1G, and the blue LED 1B and earth ground; and a PWM driver 113 that PWM (Pulse Width Modulation)-controls the switching devices 112R, 112G, and 112B respectively according to the control signal D4 supplied from the backlight control section 12 and the control signal D0 supplied from the timing control section 61.

The backlight control section 12 has a light quantity balance control section 121 and a light quantity control section 122. The light quantity balance control section 121 respectively generates and outputs the control signal D3 (the red-use control signal D3R, the green-use control signal D3G, and the blue-use control signal D3B) to the constant current drivers 111R, 111G, and 111B based on the light receiving data D1 (the red light receiving data D1R, the green light receiving data D1G, and the blue light receiving data D1B) supplied from the A/D conversion section 15 and the light receiving data D2 supplied from the A/D conversion section 18, and thereby the light quantity balance control section 121 exercises control so that the light emission quantity of the illuminated light Lout is changed while color balance (white balance of white light) of the illuminated light Lout from the light source section 10 is maintained. The light quantity control section 122 generates and outputs the control signal D4 to the PWM driver 113 based on the green light receiving data D1G out of the light receiving data D1 supplied from the A/D conversion section 15 and the light receiving data D2 supplied from the A/D conversion section 18, and thereby the light quantity control section 122 exercises control so that the light emission quantity of the illuminated light Lout from the light source section 10 is changed. Further, the light quantity balance control section 121 and the light quantity control section 122 respectively input the RGB signal. The light quantity balance control section 121 and the light quantity control section 122 generate the control signals D3 and D4 by using luminance distribution of a display picture contained in the RGB signal in addition to the light receiving data D1 based on the light quantity of the illuminated light Lout and the light receiving data D2 based on the light quantity of the environment light Ls.

The backlight drive section 11 corresponds to a specific example of "drive means" in the present invention, the backlight control section 12 corresponds to a specific example of "control means" in the present invention, and the outside light sensor 16 corresponds to a specific example of "light receiving device" in the present invention.

Next, a description will be given in detail of operations of the backlight device 1 and the liquid crystal display unit 3 of this embodiment having the foregoing structures.

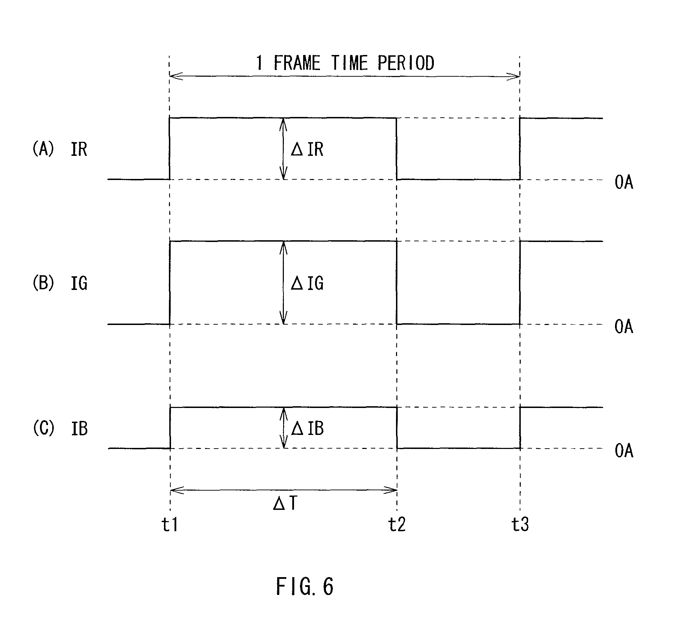

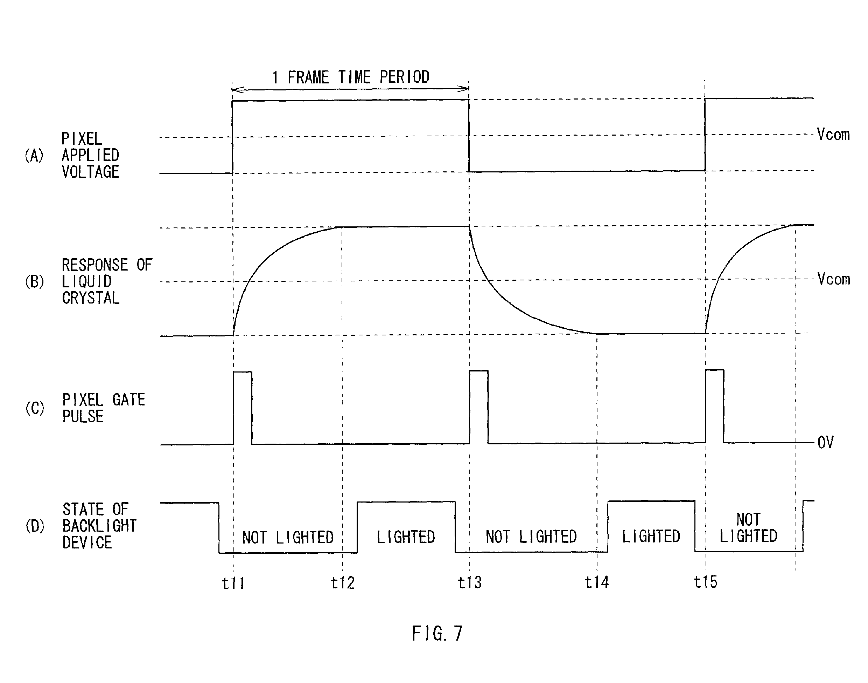

First, a description will be given of basic operations of the backlight device 1 and the liquid crystal display unit 3 of this embodiment with reference to Fig. 1 to Fig. 8. Fig. 6 is a timing waveform chart illustrating lighting operation in the light source section 10 of the backlight device 1. Fig. 6(A) illustrates the current IR flowing through the red LED 1R, Fig. 6(B) illustrates the current IG flowing through the green LED 1G, and Fig. 6(C) illustrates the current IB flowing through the blue LED 1B. Fig. 7 illustrates a timing waveform chart schematically illustrating operation of the entire liquid crystal display unit 3. Fig. 7(A) illustrates a voltage (pixel applied voltage and drive voltage) that is applied from an X driver 51 to one pixel electrode 212 in the liquid crystal display panel 2. Fig. 7(B) illustrates response of liquid crystal molecules (actual potential state in the pixel electrode 212). Fig. 7(C) illustrates a voltage (pixel gate pulse) that is applied from a Y driver 52 to a gate of the TFT device in the liquid crystal display panel 2.

In the backlight device 1, in the case where the switching devices 112R, 112G, and 112B respectively become on-state in the backlight drive section 11, the currents IR, IG, and IB are respectively flown from the constant current drivers 111R, 111G, and 111B into the red LED 1R, the green LED 1G, and the blue LED 1B in the light source section 10. Thereby, red light emission, green light emission, and blue light emission are respectively initiated, and the illuminated light Lout as mixed light is emitted.

At this time, the control signal D0 is supplied from the timing control section 61 to the backlight drive section 11. A control signal D5 based on the control signal D0 is respectively supplied from the PWM driver 113 in the backlight drive section 11 to the switching devices 112R, 112G, and 112B. Thereby, the switching devices 112R, 112G, and 112B become on-state at the time according to the control signal D0. Lighting time periods of the red LED 1R, the green LED 1G, and the blue LED 1B are synchronized with the above. In other words, the red LED 1R, the green LED 1G, and the blue LED 1B are PWM-driven by the control signal D5.

At this time, the illuminated light sensor 13 receives the illuminated light Lout from the light source section 10. Specifically, in the red light sensor 13R, the green light sensor 13G, and the blue light sensor 13B in the illuminated light sensor 13, each color light out of the illuminated light Lout from the light source section 10 is respectively extracted by a photodiode for each color, and a current according to the light quantity of each color light is generated. Thereby, light receiving data of a current value is supplied to the I/V conversion section 14. The light receiving data of the current value for each color is respectively converted to light receiving data of an analog voltage value by the I/V conversion section 14. Further, the light receiving data of the analog voltage value for each color is converted to the light receiving data D1R, D1G, and D1B of the digital voltage value by the A/D conversion section 15.

In the backlight control section 12, the control signals D3R, D3G, and D3B are respectively supplied from the light quantity balance control section 121 to the constant current drivers 111R, 111G, and 111B based on the light receiving data D1R, D1G, and D1B for each color supplied from the A/D conversion section 15, and thereby sizes ΔIR, ΔIG, and ΔIB of the currents IR, IG, and IB, that is, light emission luminance of the LEDs 1R, 1G, and 1B is adjusted so that luminance and chromaticity (color balance) of the illuminated light Lout are maintained (refer to Fig. 6(A) to Fig. 6(C)). Further, in the light quantity control section 122, the control signal D4 is generated based on the light receiving data D1G out of the light receiving data D1R, D1G, and D1B for each color supplied from the A/D conversion section 15, and the control signal D4 is supplied to the PWM driver 113, and thereby on-time period of the switching devices 112R, 112G, and 112B, that is, lighting time period ΔT of the LEDs 1R, 1G, and 1B for each color is adjusted (refer to Figs. 6(A) to 6(C)). Accordingly, based on the illuminated light Lout from the light source section 10, the sizes ΔIR, ΔIG, and ΔIB of the currents IR, IG, and IB (light emission luminance of the LEDs 1R, 1G, and 1B) and the lighting time period are controlled, and thereby the light emission quantity of the illuminated light Lout is controlled in units of 4 partial lighting sections. In addition, the light quantity control section 122 herein inputs only D1G out of the control signals D1R, D1G, and D1B, since human visibility of green light is highest. However, other control signals D1R and D1B may be inputted.

Meanwhile, in the entire liquid crystal display unit 3 of this embodiment, the illuminated light Lout from the light source section 10 of the backlight device 1 is modulated in the liquid crystal layer 20 by a drive voltage (pixel applied voltage) to the pixel electrode 212 that is outputted from the X driver 51 and the Y driver 52 based on the image signal, and the modulated light is outputted from the liquid crystal display panel 2 as display light Dout. As described above, the backlight device 1 functions as a backlight (illuminating device for liquid crystal) of the liquid crystal display unit 3, and thereby picture display by the display light Dout is performed.

Specifically, for example, as illustrated in Fig. 7(C), a pixel gate pulse is applied from the Y driver 52 to a gate of the TFT devices of one horizontal line in the liquid crystal display panel 2. In addition, as illustrated in Fig. 7(A), the pixel applied voltage based on the picture signal is applied from the X driver 51 to the pixel electrodes 212 of the horizontal line. Here, as illustrated in Fig. 7(B), actual potential response (liquid crystal response) of the pixel electrode 212 to the pixel applied voltage is delayed (while the pixel applied voltage is started up in timing t11, the actual potential is started up in timing t12). The backlight device 1 becomes lighting state in the time period from the timing t12 to timing t13 in which the actual potential is equal to the pixel applied voltage, and thereby picture display based on the picture signal is performed in the liquid crystal display unit 3. Further, in Fig. 7, the time period from the timing t11 to the timing t13 corresponds to one horizontal time period (1 frame time period). In subsequent one horizontal time period from the timing t13 to timing t15, operation similar to that of one horizontal time period from the timing t11 to the timing t13 is performed, except that the pixel applied voltage is inverted with respect to a common potential Vcom to prevent a liquid crystal ghost image or the like.

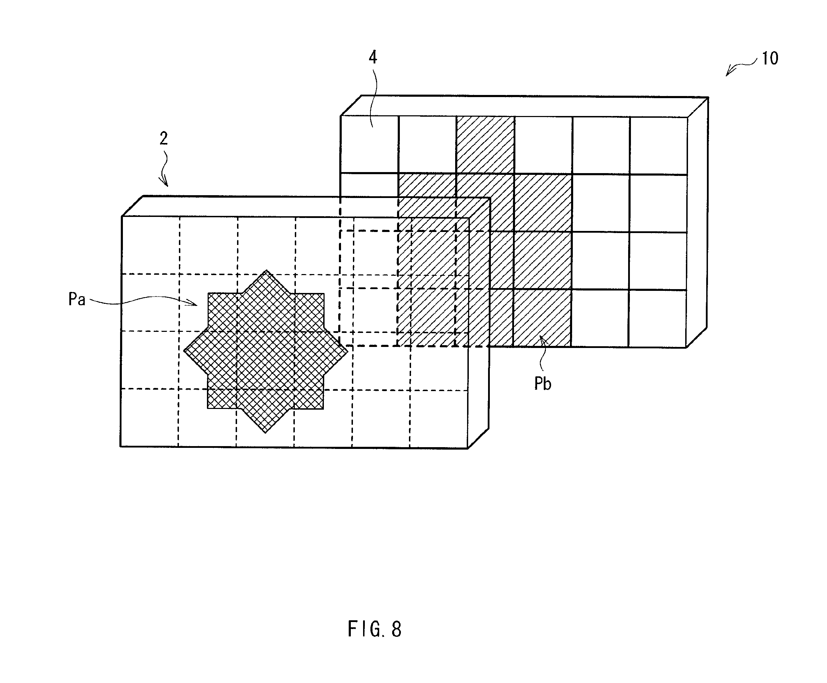

Further, in this liquid crystal display unit 3, the control signal D0 is supplied from the timing control section 61 to the PWM driver 113 in the backlight drive section 11 by using the signal supplied from the RGB processing section 60 (signal based on the picture signal). Thus, for example, as illustrated in Fig. 8, in the light source section 10, operation (partial lighting operation) in which only the partial lighting sections 4 of a region corresponding to a picture display region (region in which a display picture Pa is displayed) in the liquid crystal display panel 2 are lighted to form a partial lighting region Pb is enabled.

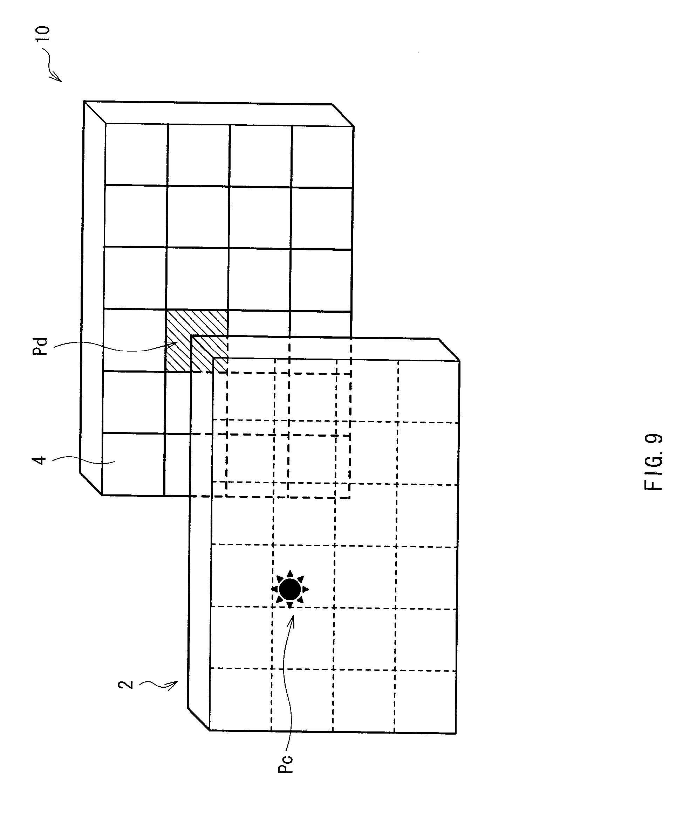

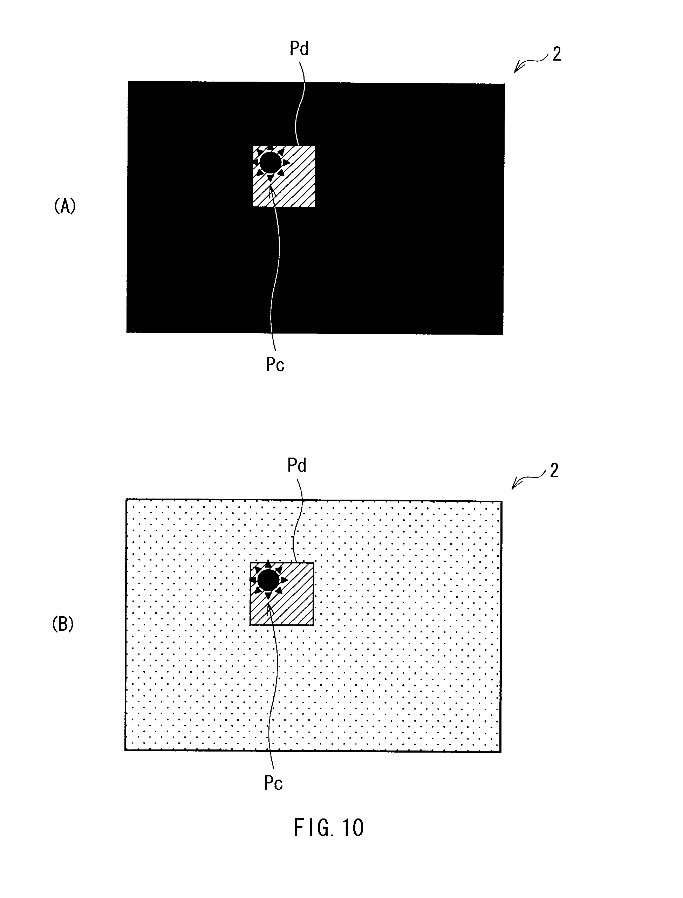

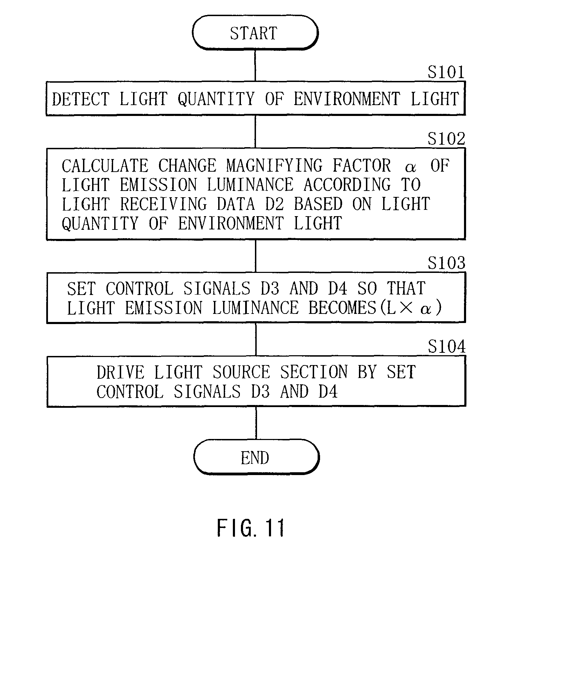

Next, a description will be given in detail of a control operation (control operation by using outside light) in consideration of outside light (environment light) as one of characteristics of the present invention in comparison to a comparative example with reference to Fig. 9 to Fig. 17 in addition to Fig. 1 to Fig. 8. Here, Fig. 10 illustrates an example of partial lighting operation in a conventional backlight device according to the comparative example. Fig. 11 is a flowchart illustrating the partial lighting operation (partial lighting operation by control operation by using outside light) in the backlight device 1 of this embodiment. Further, a description will be hereinafter given of a case that a size of a picture display region (region in which a display picture Pc is displayed) in the liquid crystal display panel 2 is smaller than a size of the partial lighting section 4, that is, a case that a corresponding partial lighting region Pd is larger than the picture display region as illustrated in Fig. 9, for example.

In this case, in the conventional backlight device according to the comparative example, appearance of the display picture Pc differs according to lightness around the device, and an image quality is deteriorated in some cases. Specifically, in the case where the surrounding environment is comparatively dark, for example, as illustrated in Fig. 10(A), there is an advantage that since a non lighting region having given luminance or less appears dark, the display contrast is improved more than that of an inherent display image. However, since the partial lighting region in which light is emitted at given luminance or more appears to come up, the border between the lighting region in the partial lighting section 4 and the non-lighting region around the lighting region is viewed, resulting in an unnatural picture in some cases. Further, on the contrary, in the case where the surrounding environment is comparatively light, for example, as illustrated in Fig. 10(B), there is an advantage that the border between the lighting region in the partial lighting section 4 and the non-lighting region around the lighting region is hardly viewed. However, since the non-lighting region appears light, the display contrast is decreased more than that of the inherent display picture, resulting in a deteriorated display image quality in some cases.

In the backlight device 1 of this embodiment, control operation by using outside light is performed, for example, as illustrated in Fig. 11. First, the outside light sensor 16 receives outside light (environment light Ls) around the device (step S101 of Fig. 11). Specifically, in the photodiode (not illustrated) in the outside light sensor 16, a current corresponding to a light quantity of the environment light Ls is generated, and thereby light receiving data of the current value is supplied to the I/V conversion section 17. Then, the light receiving data of the current value is converted to light receiving data of an analog voltage value by the I/V conversion section 17. Further, the light receiving data of the analog voltage value is converted to the light receiving data D2 of a digital voltage value by the A/D conversion section 18, and the converted data is supplied to the light quantity balance control section 121 and the light quantity control section 122 in the backlight control section 12.

Next, the light quantity balance control section 121 and the light quantity control section 122 calculate change magnifying factor α of light emission luminance of the light source section 10 according to the light receiving data D2 based on the light quantity of the environment light Ls (step S102). Specifically, the change magnifying factor α to the light emission luminance L (light emission light quantity) of the light source section 10 set according to the light receiving data D1 based on the light quantity of the illuminated light Lout is calculated. The light quantity balance control section 121 and the light quantity control section 122 set the control signals D3 and D4 so that the light emission luminance of the light source section 10 becomes (L*α) (step S103). Based on the set control signals D3 and D4, the constant current drivers 111R, 111G, and 111B and the PWM driver 113 in the backlight drive section 11 drive the light source section 10 (step S104).

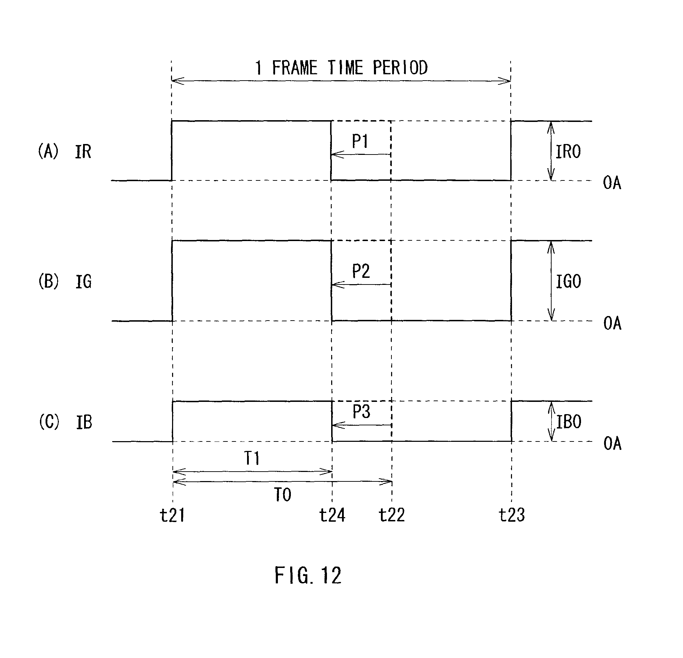

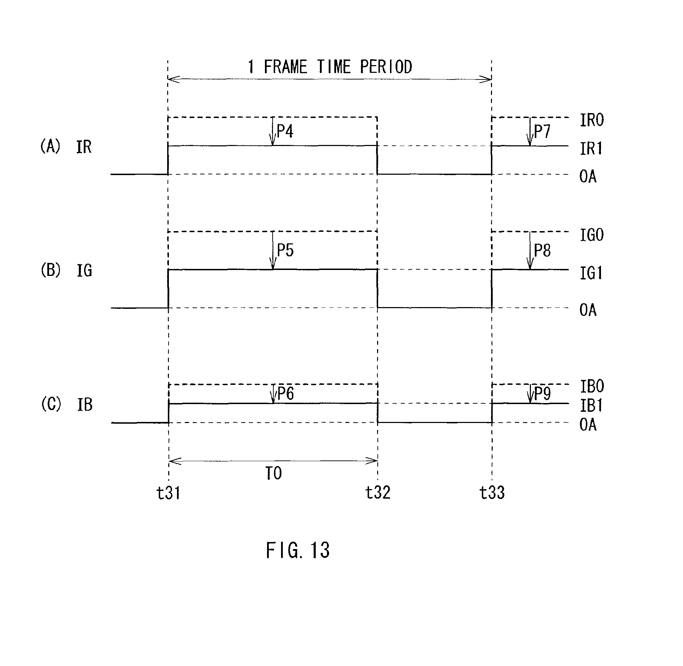

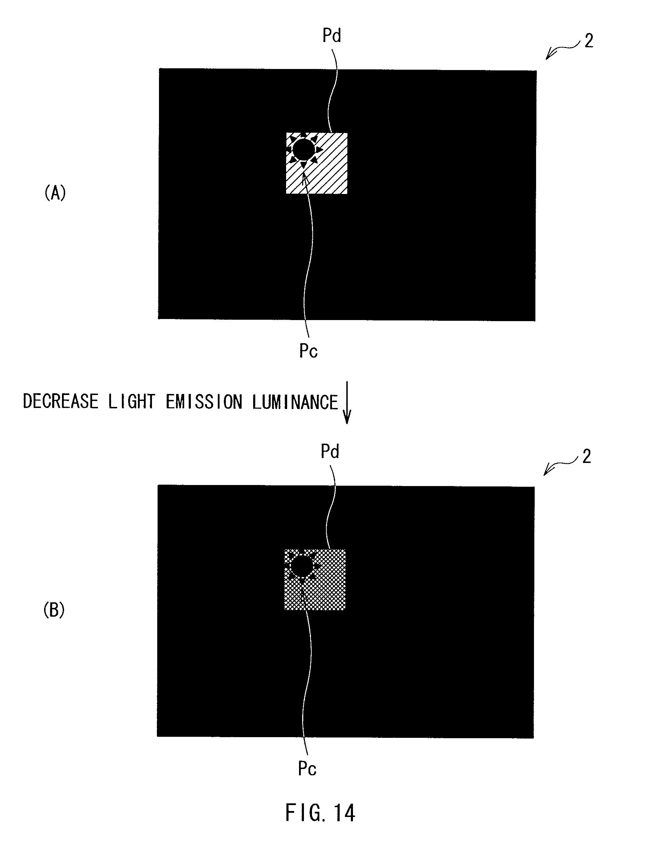

Specifically, in the case where the surrounding environment is comparatively dark (in the case where the light quantity of the environment light Ls is smaller than a given threshold value), the change magnifying factor α is set (0<α<1) so that the light emission quantity of the partial lighting section determined to emit light at given luminance or more based on luminance distribution of the display picture is decreased (light emission luminance is lowered). More specifically, for example, as indicated by referential symbols P1 to P3 in Figs. 12(A) to 12(C), the control signal D4 is adjusted so that on-state time periods of the switching devices 112R, 112G, and 112B, that is, lighting time periods of the respective LEDs 1R, 1G, and 1B are shortened (in Fig. 12, the lighting time period is decreased from T0 (time period from timing t21 to timing t22) to T1 (time period from the timing t21 to timing t24). Further, for example, as indicated by referential symbols P4 to P6 in Figs. 13(A) to 13(C), the control signal D3 is adjusted so that values of the currents IR, IG, and IB flowing through the respective LEDs 1R, 1G, and 1B are decreased (in Fig. 13, the value of the current IR is decreased from IRO to IR1, the value of the current IG is decreased from IGO to IG1, and the value of the current IB is decreased from IBO to IB1). In addition, even if the values of the currents IR, IG, and IB are respectively changed, color balance of the illuminated light Lout is maintained by the light quantity balance control section 121. Accordingly, in the case where the surrounding environment is comparatively dark, for example, as illustrated in Figs. 14(A) and 14(B), control is exercised so that light emission luminance of the partial lighting section (partial lighting region Pd) in which light is emitted at given luminance or more is decreased (light emission quantity is decreased). Thereby, as illustrated in Fig. 14(B), in the partial lighting section 4, the border between the partial lighting region Pd in which light is emitted at given luminance or more and the non-lighting region on the periphery thereof in which light is emitted at luminance under given luminance is hardly viewed compared to the comparative example (Fig. 10(A) and Fig. 14(A)).

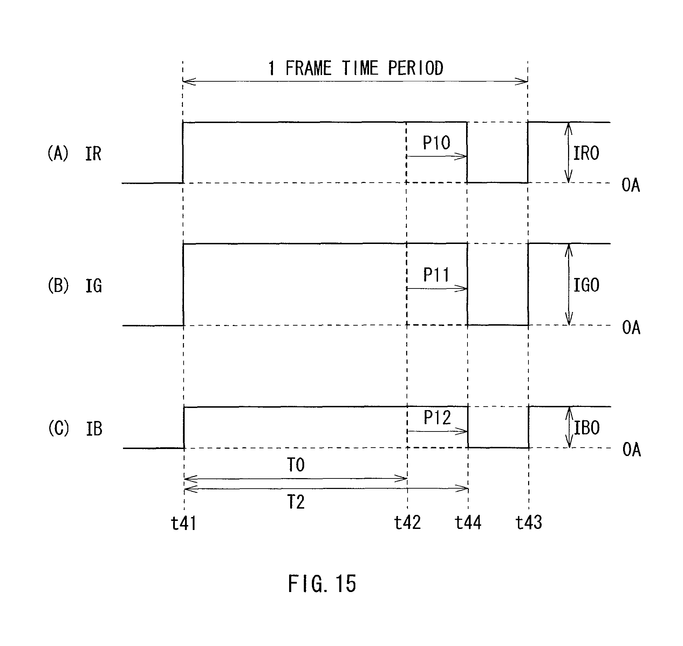

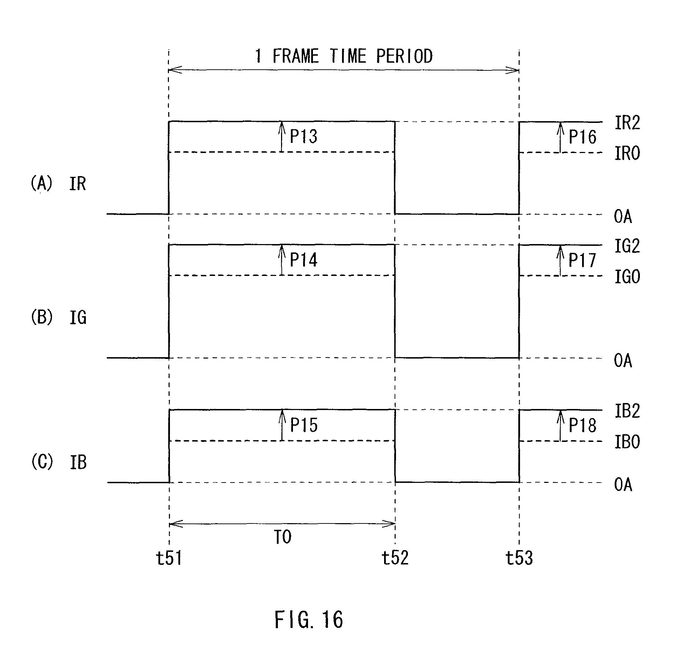

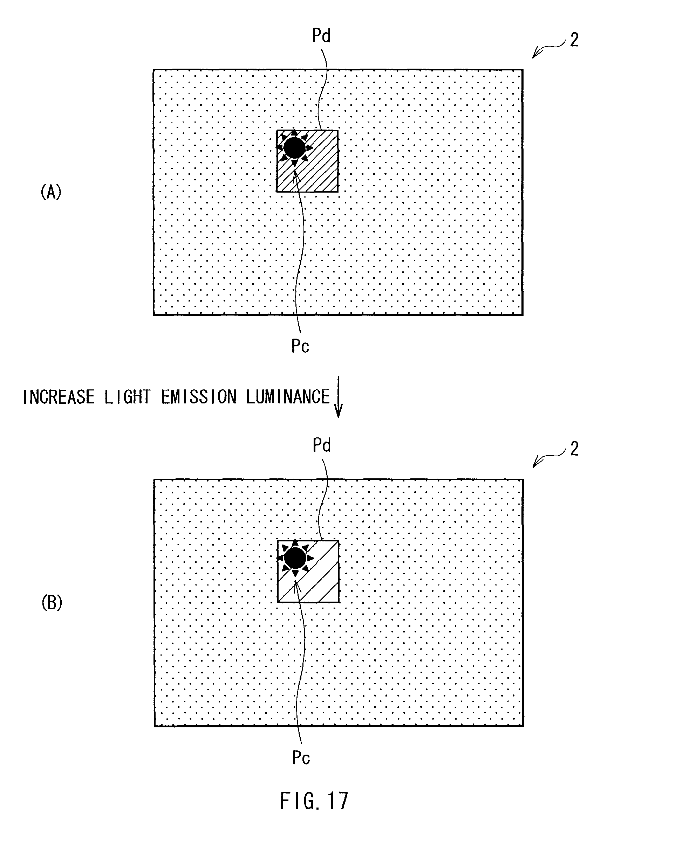

Meanwhile, in the case where the surrounding environment is comparatively light (in the case where the light quantity of the environment light Ls is larger than a given threshold value), the change magnifying factor α is set (1<α) so that the light emission quantity of the partial lighting section determined to emit light at given luminance or more based on luminance distribution of the display picture is increased (light emission luminance is improved). More specifically, for example, as indicated by referential symbols P10 to P12 in Figs. 15(A) to 15(C), the control signal D4 is adjusted so that on-state time periods of the switching devices 112R, 112G, and 112B, that is, lighting time periods of the respective LEDs 1R, 1G, and 1B are increased (in Fig. 15, the lighting time period is increased from T0 (time period from timing t41 to timing t42) to T2 (time period from timing t41 to timing t44)). Further, for example, as indicated by referential symbols P13 to P15 in Figs. 16(A) to 16(C), the control signal D3 is adjusted so that values of the currents IR, IG, and IB flowing through the respective LEDs 1R, 1G, and 1B are increased (in Fig. 16, the value of the current IR is increased from IRO to IR2, the value of the current IG is increased from IGO to IG2, and the value of the current IB is increased from IBO to IB2). In addition, even if the values of the currents IR, IG, and IB are respectively changed, color balance of the illuminated light Lout is maintained by the light quantity balance control section 121. Accordingly, in the case where the surrounding environment is comparatively light, for example, as illustrated in Figs. 17(A) and 17(B), control is exercised so that light emission luminance of the partial lighting section (partial lighting region Pd) in which light is emitted at given luminance or more is increased (light emission quantity is increased). Thereby, as illustrated in Fig. 17(B), the display contrast is increased compared to the comparative example (Fig. 10(B) and Fig. 17(A)) (in other words, lowering of the display contrast is inhibited more compared to in the comparative example).

As described above, in this embodiment, the outside light sensor 16 receives outside light around the device (environment light Ls), and the light emission quantity of each partial lighting section 4 in the light source section 10 is respectively controlled according to the light quantity of the received environment light Ls and the luminance distribution of the display picture contained in the RGB signal. Thus, the luminance distribution of the display picture is able to be adjusted (lighting operation is able to be performed) in consideration of lightness of the surrounding environment (environment light) not depending on a content of the display picture.

Specifically, in the case where the surrounding environment is comparatively dark (in the case where the light quantity of the environment light Ls is smaller than a given threshold value), the light emission quantity of the partial lighting section (partial lighting region Pd) in which light is emitted at given luminance or more is decreased (light emission luminance is lowered). Thus, the border between the partial lighting region Pd in which light is emitted at given luminance or more and the non-lighting region on the periphery thereof in which light is emitted at luminance under given luminance is able to be hardly viewed compared to the conventional art.

Meanwhile, in the case where the surrounding environment is comparatively light (in the case where the light quantity of the environment light Ls is larger than the given threshold value), the light emission quantity of the partial lighting section (partial lighting region Pd) in which light is emitted at given luminance or more is increased (light emission luminance is improved). Thus, the display contrast is able to be improved more compared to the conventional art (in other words, lowering of the display contrast is inhibited more compared to in the conventional art).

Further, since the backlight device 1 is used as a backlight of the liquid crystal display unit 3 (illuminating device for liquid crystal), image quality deterioration caused by lightness of the surrounding environment (due to lightness of the surrounding environment, the border between each partial lighting section 4 is viewed, and thus the display picture becomes unnatural or the display contrast becomes lowered) is able to be inhibited, and the image quality of the display picture is able to be improved.

### [Second embodiment]

Next, a description will be given of a second embodiment of the present invention. In the backlight device 1 of this embodiment, the light emission quantity of each partial lighting section 4 is controlled by using luminance information of a picture contained in the RGB signal in addition to the light quantity of outside light (environment light Ls) described in the first embodiment. For the same elements as those in the first embodiment, the same referential symbols are affixed thereto, and the description will be omitted as appropriate.

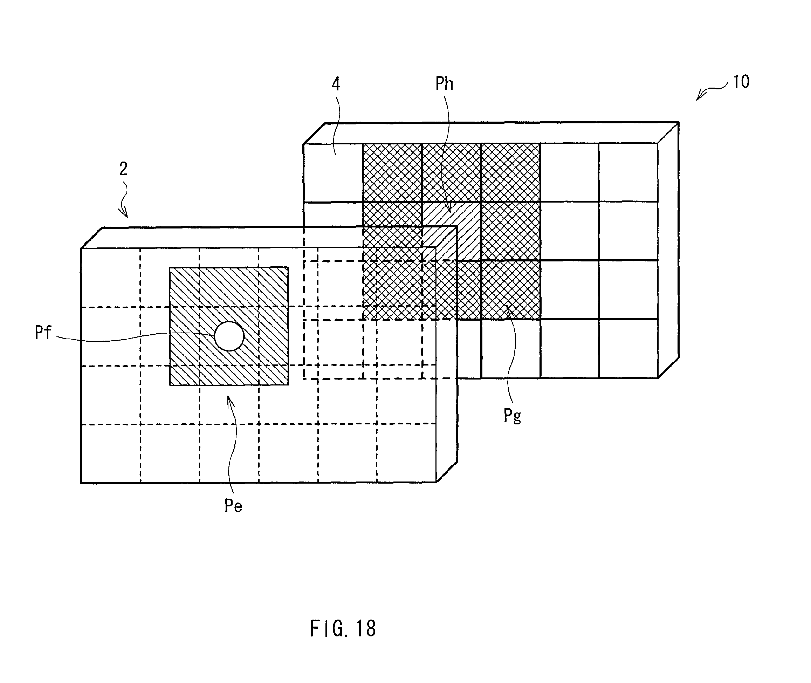

Thus, the control operation by using outside light described in the first embodiment is able to be performed, while pseudo luminance emphasis processing (contrast enhancement processing) in which the light emission quantity of the partial lighting section 4 of a region Pg corresponding to a display picture Pf of a light (high luminance) section (high luminance region) out of a display picture Pe in the liquid crystal display panel 2 is increased than a light emission quantity of other partial lighting sections Pg is performed, for example, as illustrated in Fig. 18, as in a case of so-called luminance emphasis processing in a display unit using a CRT (contrast enhancement processing in which a light section of the display picture is more lightened).

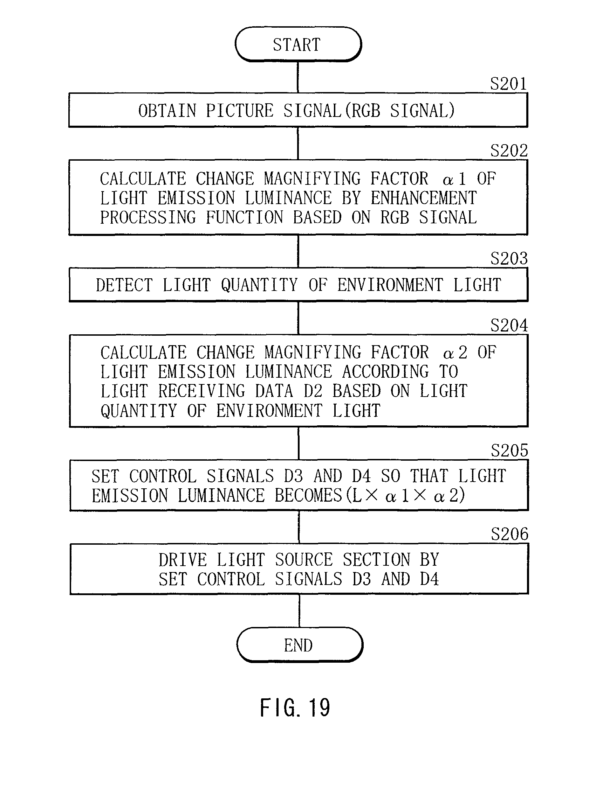

Specifically, in the case where the light quantity balance control section 121 and the light quantity control section 122 obtain the RGB signal from the RGB processing section 60 (step S201 of Fig. 19), the light quantity balance control section 121 and the light quantity control section 122 calculate change magnifying factor α1 of light emission luminance of the light source section 10 with the use of an enhancement processing function based on luminance information of a picture signal contained in the RGB signal (step S202). Specifically, the change magnifying factor α1 to the light emission luminance L (light emission quantity) of the light source section 10 set according to the light receiving data D1 based on the light quantity of the illuminated light Lout is calculated. After that, as in the control operation by using outside light (steps S101 to S104 of Fig. 11) described in the first embodiment, the light quantity of the environment light Ls is detected by the outside light sensor 16 (step S203), the light quantity balance control section 121 and the light quantity control section 122 calculate change magnifying factor α2 of light emission luminance of the light source section 10 according to the light receiving data D2 based on the light quantity of the environment light Ls (step S204). The light quantity balance control section 121 and the light quantity control section 122 set the control signals D3 and D4 so that the light emission luminance of the light source section 10 becomes (L*α1*α2) (step S205). Based on the set control signals D3 and D4, the constant current drivers 111R, 111G, and 111B and the PWM driver 113 in the backlight drive section 11 drive the light source section 10 (step S206).

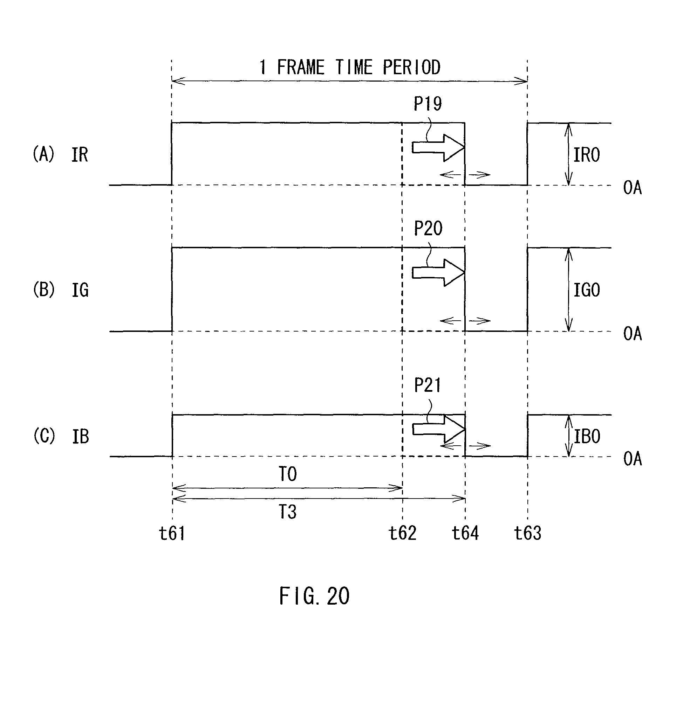

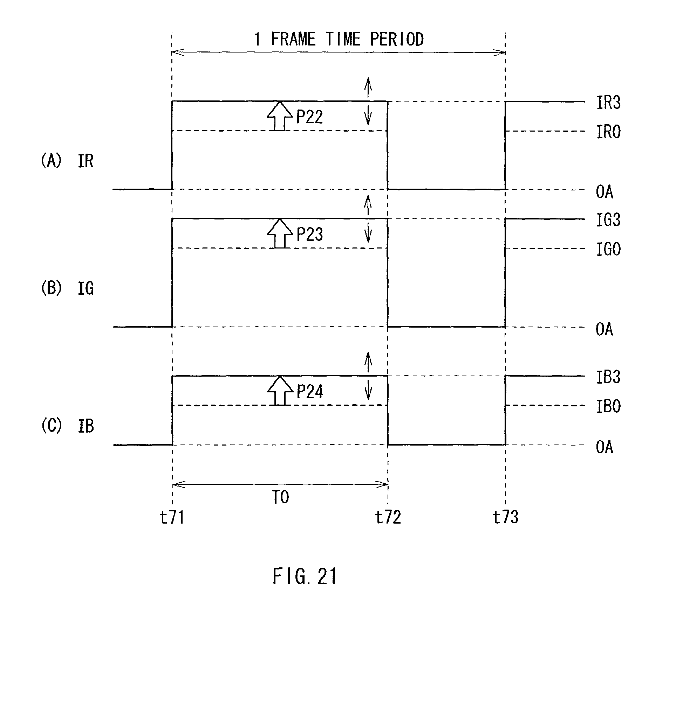

More specifically, while contrast enhancement processing is performed by increasing the lighting time period of the respective LEDs 1R, 1G, and 1B (in Fig. 20, the lighting time period is increased from T0 (time period from timing t61 to timing t62) to T3 (time period from the timing t61 to timing t64)), for example, as indicated by referential symbols P19 to P21 in Figs. 20(A) to 20(C), the control signal D4 is adjusted so that control operation by using outside light is performed by further adjusting the lighting time period as indicated by arrows in the figure. Further, while contrast enhancement processing is performed by increasing values of the currents IR, IG, and IB flowing through the respective LEDs 1R, 1G, and 1B are increased (in Fig. 23, the value of the current IR is increased from IRO to IR3, the value of the current IG is increased from IGO to IG3, and the value of the current IB is increased from IBO to IB3)), for example, as indicated by referential symbols P22 to P24 in Figs. 21(A) to 21(C), the control signal D3 is adjusted so that control operation by using outside light is performed by further adjusting the current values as indicated by arrows in the figure. Further, at this time, even if the values of the currents IR, IG, and IB are respectively changed, color balance of the illuminated light Lout is maintained by the light quantity balance control section 121.

As described above, in this embodiment, the light emission quantity of each partial lighting section 4 is respectively controlled by additionally using luminance information of a picture contained in the RGB signal, it is possible that control is exercised so that while the light emission quantity of the partial lighting section in the region corresponding to the high luminance region out of the picture display region is increased more than the light emission quantity of other partial lighting sections based on the luminance information, the light emission quantity of each partial lighting section 4 is controlled according to the light quantity of the environment light Ls. That is, it is possible that while the light emission quantity of each partial lighting section 4 is controlled so that display luminance of the high luminance region is more increased based on the luminance information of the picture, the light emission quantity of each partial lighting section 4 is controlled according to the light quantity of the environment light Ls. Thus, in addition to the effect in the first embodiment, it is possible that while so-called contrast enhancement processing is performed, light emission quantity of the partial lighting section 4 is controlled according to lightness of the surrounding environment.

As above, the present invention has been described with reference to the first embodiment and the second embodiment. However, the present invention is not limited to the foregoing embodiments, and various modifications may be made.

For example, in the foregoing embodiments, a description has been given of a case that the light emission quantity (light emission luminance) of each partial lighting section 4 in the light source section 10 is controlled by adjusting the lighting time period ΔT of the respective LEDs 1R, 1G, and 1B, or adjusting the sizes ΔIR, ΔIG, and ΔIB of the currents IR, IG, and IB flowing through the respective LEDs 1R, 1G, and 1B. More generally, the light emission quantity (light emission luminance) of each partial lighting section 4 in the light source section 10 may be controlled by adjusting at least one of the lighting time period ΔT and the current sizes ΔIR, ΔIG, and ΔIB.

Further, in the foregoing embodiments, the backlight drive section 11 is controlled by using the light receiving data from one illuminated light sensor 13 and one outside light sensor 16. However, for example, the backlight drive section 11 may be controlled by providing a plurality of illuminated light sensors and a plurality of outside light sensors in a position different from each other in relation to, for example, the light source section 10, and using an average value or the like of the light receiving data from the plurality of illuminated light sensors and the plurality of outside light sensors.

Further, in the foregoing embodiments, the description has been given of the case that the light source section 10 is configured of the red LED 1R, the green LED 1G, and the blue LED 1B. However, the light source section 10 may be configured of an LED emitting other color light in addition thereto (or instead thereof). In the case where the light source section 10 is configured of different four or more color light, it is possible that the color reproduction range is expanded, and a wider variety of colors is expressed.

Further, in the foregoing embodiments, the description has been given of the additive color mixture type backlight device 1 in which the light source section 10 includes the plurality of red LEDs 1R, the plurality of green LEDs 1G, and the plurality of blue LEDs 1B, and the illuminated light Lout as specific color light (white color) is obtained by mixing the plurality of color light (red light, green light, and blue light). However, it is possible that the light source section is configured of one type of LED to structure a backlight device emitting homochromatic color illuminated light. In this case, change of luminance of illuminated light is able to be more decreased with a simple structure as well.

Further, in the foregoing embodiments, the description has been given of the case that the liquid crystal display unit 3 is the transmissive liquid crystal display unit including the backlight device 1. However, it is possible that a front light device is structured by the light source device of the present invention to obtain a reflective liquid crystal display unit.

## Claims

1. A light source device applied to a liquid crystal display unit including a liquid crystal panel modulating incident light based on a picture signal, **characterized in that** the light source device comprises:
a light source section having a plurality of partial lighting sections, each of the partial lighting sections being controlled separately, and emitting light which is to be an incident light to the liquid crystal panel;
a drive means for driving the light source section so that each of the partial lighting sections lights separately;
a light receiving device receiving environment light around the device; and
a control means for controlling the drive means according to a light quantity of the environment light received by the light receiving device and to luminance distribution of a display picture contained in the picture signal, and controlling a light emission quantity of each of the partial lighting sections.

2. The light source device according to claim 1, **characterized in that** the control means exercises control so that a light emission quantity of a partial lighting section which emits light at given luminance or more is decreased in the case where the light quantity of the environment light is smaller than a given threshold value.

3. The light source device according to claim 1, **characterized in that** the control means exercises control so that a light emission quantity of a partial lighting section which emits light at given luminance or more is increased in the case where the light quantity of the environment light is larger than the threshold value.

4. The light source device according to claim 1, **characterized in that** the control means exercises control so that a light emission quantity of a partial lighting section which emits light at given luminance or more is decreased in the case where the light quantity of the environment light is smaller than a given threshold value, while the control means exercises control so that the light emission quantity of the partial lighting section which emits light at given luminance or more is increased in the case where the light quantity of the environment light is larger than the threshold value.

5. The light source device according to claim 1, **characterized in that** the drive means drives each of the partial lighting sections of the light source section by a pulse signal, and
the control means controls the light emission quantity of each of the partial lighting sections by changing a width or a height of the pulse signal or both of them.

6. The light source device according to claim 1, **characterized in that** the control means exercises control, based on the luminance distribution of the display picture, so that light emission quantity of a partial lighting section in a region corresponding to a higher luminance region in a picture display region is larger than light emission quantities of other partial lighting sections, while the control means controls the light emission quantity of each of the partial lighting sections according to the light quantity of the environment light.

7. A liquid crystal display unit having an illuminating means for emitting light, and a liquid crystal panel modulating the light emitted from the illuminating means based on a picture signal, **characterized in that** the illuminating means comprises:
a light source section having a plurality of partial lighting sections, each of the partial lighting sections being controlled separately;
a drive means for driving the light source section so that each of the partial lighting sections lights separately;
a light receiving device receiving environment light around the device; and
a control means for controlling the drive means according to a light quantity of the environment light received by the light receiving device and to luminance distribution of a display picture contained in the picture signal, and controlling a light emission quantity of each of the partial lighting sections.
